# EUROPEAN PATENT APPLICATION

(11) **EP 4 773 377 A1**
(43) Date of publication of application: **08.07.2026**
(21) Application number: 25829862.9
(22) Date of filing: 16.06.2025
(51) Int. Cl.: H01M 50/271

(54) **BATTERY MODULE CASE COVER AND BATTERY MODULE**

(30) Priority: 19.06.2024 CN 202421410566 U
(71) Applicant: Eve Energy Co., Ltd., Huizhou, Guangdong 516006 (CN)
(72) Inventor: ZHANG, Weijin, Huizhou, Guangdong 516006 (CN)
(74) Representative: Stöckeler, Ferdinand
(86) International application number: PCT/CN2025/101252
(87) International publication number: WO 2025/261308

(57) **Abstract**

The present application provides a battery module box cover and a battery module. The battery module box cover includes: a box cover body, where welding holes are formed in the box cover body, and the welding holes penetrates through the box cover body; electrical connection sheets fixed on a side of the box cover body, where welding spots are arranged on the electrical connection sheets, and the welding spots are exposed through the welding holes; and welding hole sealing covers fixed on another side of the box cover body and configured for sealing the welding holes.

## Description

The present Application claims priority to Chinese Patent Application No. 202421410566.7 filed to China National Intellectual Property Administration on June 19, 2024, the content of which is incorporated herein by reference in its entirety.

### TECHNICAL FIELD

The present application relates to the field of batteries, and in particular to a battery module box cover, and a battery module.

### BACKGROUND

A power supply PACK refers to a battery pack composed of multiple battery cells, which is used in fields such as energy storage systems and electric vehicles. The power supply PACK includes a battery module, a mechanism system, an electrical system, a thermal management system, and a battery management system (BMS).

The power supply PACK on the market further includes a cell contact system (CCS) bracket, and parts of the power supply PACK are connected by bolts and nuts.

### SUMMARY

However, such arrangement method makes the power supply PACK low integration, low space utilization, low mounting efficiency and high cost.

The present application provides a battery module box cover, including: a box cover body, where welding holes are formed in the box cover body, and the welding holes penetrate through the box cover body; electrical connection sheets, fixed on a side of the box cover body, where welding spots are arranged on the electrical connection sheets, and the welding spots are exposed through the welding holes; and welding hole sealing covers, fixed on another side of the box cover body and configured for sealing the welding holes.

The present application further provides a battery module, including: the battery module box cover as described above; and multiple battery cells, where the multiple battery cells are welded to electrical connection sheets respectively, positive electrodes and negative electrodes of the battery cells are arranged on a same side of the battery cells, and the positive electrodes and the negative electrodes of the battery cells are welded to different electrical connection sheets respectively.

### BENEFICIAL EFFECTS

In the battery module box cover provided in the present application, the electrical connection sheets are integrated on the box cover body, the electrical connection sheets are welded and connected to the battery cells through the welding holes, and the welding holes are sealed through the welding hole sealing covers, so that the traditional cell contact system (CCS) bracket is eliminated, thereby improving the integration, space utilization, and mounting efficiency of the battery module.

With the arrangement of the positive and negative electrodes of the battery cells on a same side, the battery module provided in the present application is easily welded to the electrical connection sheets on the box cover body.

### BRIEF DESCRIPTION

FIG. 1 is a schematic diagram of a structure of a battery module box cover, where welding hole sealing covers are not shown, provided in an embodiment of the present application;
FIG. 2 is an exploded view of a battery module box cover, where a welding hole sealing covers are not shown, provided in an embodiment of the present application; and
FIG. 3 is an exploded view of a battery module provided in an embodiment of the present application;

### Reference numerals in the accompany drawings:

1: box cover body; 11: welding hole; 12: partition portion; 13: fixing plate; 2: welding hole sealing cover; 3: electrical connection sheet; 31: welding spot; 32: positive electrode electrical connection sheet; 33: negative electrode electrical connection sheet; 34: series or parallel electrical connection sheet; 4: printed circuit board; 5: battery cell; 51: positive electrode; 52: negative electrode; 6: box body; 7: adhesive layer.

### DETAILED DESCRIPTION OF THE EMBODIMENTS

In the description of the present application, unless otherwise clearly specified and limited, the terms "connected", "connected", and "fixed" should be understood in a broad sense, for example, it can be a fixed connection, a detachable connection, or an integral one; it can be a mechanical connection or an electrical connection; and it can be directly connected or indirectly connected through an intermediate medium, it can be the internal connection of two elements or the interaction relationship between two elements. For ordinary technicians in this field, the specific meaning of the terms in the present application can be understood according to the specific situation.

In the present application, unless otherwise clearly specified and limited, the first feature "above" or "below" the second feature can include the first feature and the second feature directly contacting, and can also include the first feature and the second feature not directly contacting but contacting through another feature between them. Moreover, the first feature "on", "above" and "upper" the second feature include the first feature directly above and obliquely above the second feature, or indicate that the first feature is higher in level than the second feature. The first feature "below", "under" and "lower" the second feature include the first feature directly below and obliquely below the second feature, or indicate that the first feature is lower in level than the second feature.

In the description of the embodiments, the terms "up", "down", "left", "right", "front", "rear" and other orientation or positional relationship are based on the orientation or positional relationship shown in the accompanying drawings, which is to facilitate the description and simplification of operations, rather than indicating or implying that the device or component referred to must have a specific orientation, be constructed and operated in a specific orientation, and therefore cannot be understood as a restriction on the present application. In addition, the terms "first" and "second" are used to distinguish in description and have no special meaning.

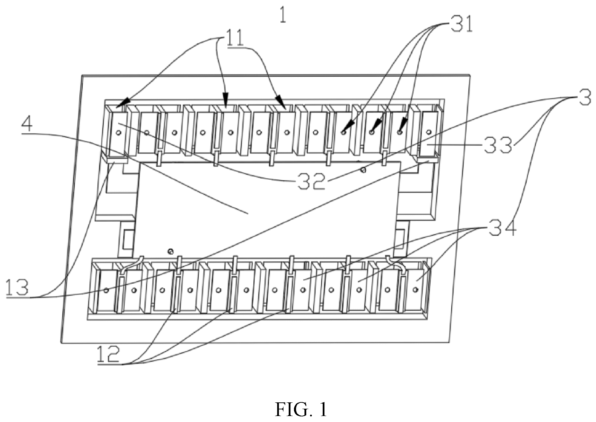

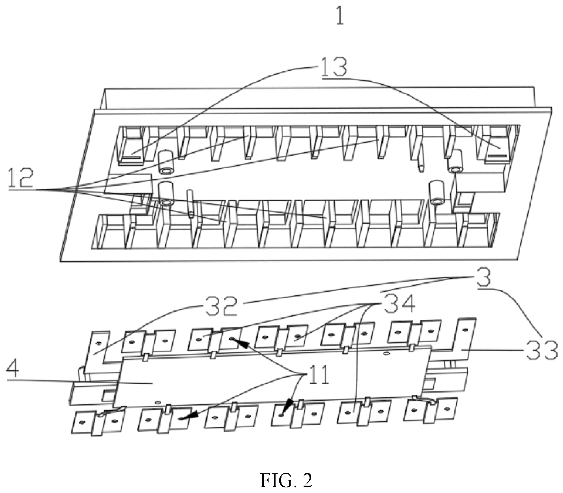

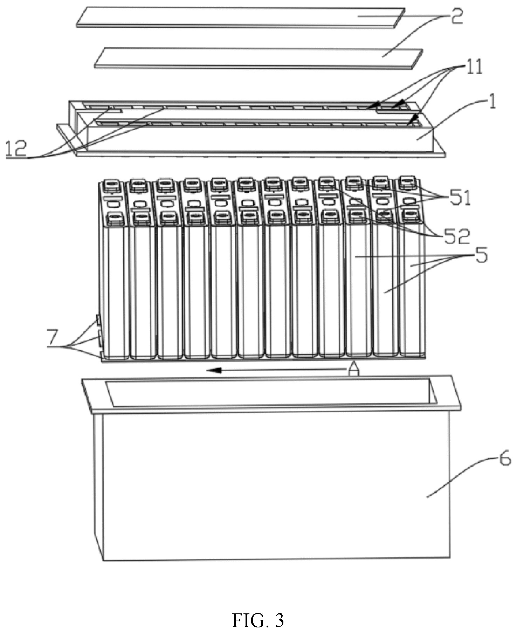

Please refer to FIG. 1 to FIG. 3. In a first aspect, an embodiment of the present application provides a battery module box cover, including:
a box cover body 1, where welding holes 11 are formed in the box cover body, and the welding holes 11 penetrate through the box cover body 1;
electrical connection sheets 3, fixed on a side of the box cover body 1, where welding spots 31 are arranged on the electrical connection sheets 3, and the welding spots 31 are exposed through the welding holes 11; and
welding hole sealing covers 2, fixed on another side of the box cover body 1 and configured for sealing the welding holes 11.

It is understandable that the welding holes 11 in the box cover body 1 are arranged to facilitate the welding operation between the electrical connection sheets 3 and the battery cells 5 when the box cover body 1 has been connected to a box body 6. A size of the welding holes is configured as needed, as long as it facilitates the welding between the welding spots 31 of the electrical connection sheets 3 and the battery cells 5. The welding spots 31 of the electrical connection sheets 3 are configured to be electrically connected to positive electrodes 51 or negative electrodes 52 of the battery cells 5, so as to realize a series or parallel connection of the battery cells 5. Each of the welding holes 11 is corresponding to one or multiple of the welding spots on the electrical connection sheets 3, which is configured as needed. Each of welding hole sealing covers 2 is corresponding to one or multiple welding holes 11, which is set as needed. In this solution, in order to facilitate a connection between the welding hole sealing covers 2 and the box cover body 1, one welding hole sealing cover 2 seals multiple welding holes 11.

In an embodiment, the electrical connection sheets 3 are fixed on the box cover body 1 and integrated with the box cover body by injection molding, and the electrical connection sheets 3 are clamped on the box cover body 1.

It is understandable that the box cover body 1 is connected to the electrical connection sheets 3 and integrated with the electrical connection sheets by injection molding, that is, the box cover body 1, the welding holes 11 and the electrical connection sheets 3 are processed and molded in one step by injection molding. After the injection molding is completed, the electrical connection sheets 3 are clamped on the box cover body 1, and the welding spots 31 on the electrical connection sheets 3 are exposed through the welding holes 11, which effectively simplify processing process and improve processing accuracy and speed. In an embodiment, the electrical connection sheets 3 are clamped on the box cover body 1 when the box cover body 1 has been processed, so as to realize an effective fixation of the electrical connection sheets.

In an embodiment, the electrical connection sheets 3 include a positive electrode electrical connection sheet 32, a negative electrode electrical connection sheet 33, and series or parallel electrical connection sheets 34. The series or parallel electrical connection sheets 34 are configured for connecting multiple battery cells 5 in series or parallel to form a battery pack. The positive electrode electrical connection sheet 32 is connected to positive electrodes of the battery pack, and the negative electrode electrical connection sheet 33 is connected to negative electrodes of the battery pack. Multiple welding holes 11 and multiple series or parallel electrical connection sheets 34 are provided. Each of the electrical connection sheets 3 is corresponding to one of the welding holes 11. Parts of the box cover body 1 located between two adjacent welding holes 11 are formed as partition portions 12, and every two series or parallel electrical connection sheets 34 are formed as one group. One group of series or parallel electrical connection sheets 34 are arranged to be adjacent to each other and integrated with each other, and one group of series or parallel electrical connection sheets 34 are clamped on the partition portion 12 between the group of series or parallel electrical connection sheets.

It is understandable that the positive electrode electrical connection sheet 32 is connected to the positive electrodes of the battery pack, and the negative electrode electrical connection sheet 33 is connected to the negative electrodes of the battery pack, that is, the positive electrodes and the negative electrodes of the battery pack are connected to an electrical equipment through the positive electrode electrical connection sheet 32 and the negative electrode electrical connection sheet 33 to form a circuit. By making each of the electrical connection sheets 3 corresponding to one of the welding holes 11, compared with one of the welding holes 11 corresponding to multiple electrical connection sheets 3, this one-to-one correspondence allows a single welding hole 11 only expose a welding spot 11 on a corresponding electrical connection sheet 3, which facilitates the welding operation of the welding spots 11, so that a coverage area of a single welding hole 11 is smaller, which is conducive to improving a strength of the box cover body 1. The partition portions 12 are automatically formed during the formation of the welding holes 11 in the box cover body 1. Parts of the box cover body 1 between the welding holes 11 are formed as the partition portions 12, and a shape and a size of the partition portions 12 are configured as needed. The partition portions 12 are configured to fix the series or parallel electrical connection sheets 34. Through clamping two adjacent integrally arranged series or parallel electrical connection sheets 34 onto the partition portion 12 therebetween, the series or parallel electrical connection sheets 34 are stably fixed on the box cover body 1, and meanwhile the welding spots 11 on the series or parallel electrical connection sheets 34 are totally exposed through the welding holes 11, thereby facilitating welding operations.

In an embodiment, fixing plates 13 are arranged on a side of a circumference of the welding holes 11 corresponding to the positive electrode electrical connection sheet 32 and the negative electrode electrical connection sheet 33. The fixing plates 13 are integrally formed with the box cover body 1. The fixing plates 13, the positive electrode electrical connection sheet 32 and the negative electrode electrical connection sheet 33 are arranged on the same side of the box cover body 1. The positive electrode electrical connection sheet 32 and the negative electrode electrical connection sheet 33 are inserted into the fixing plates 13 on a side of the corresponding welding holes 11.

It is understandable that the fixing plates 13 are integrally formed with the box cover body 1, and when the box cover body 1 has been injection molded, the fixing plates 13 are formed on the box cover body 1, and the positive electrode electrical connection sheet 32 and the negative electrode electrical connection sheet 33 are inserted into the corresponding fixing plates 13. The side of a circumference of the welding holes 11 on which the fixing plates 13 are arranged is determined according to an orientation of the positive electrode electrical connection sheet 32 and the negative electrode electrical connection sheet 33, as long as the side is convenient for an arrangement of the positive electrode electrical connection sheet 32 and the negative electrode electrical connection sheet 33.

In an embodiment, the electrical connection sheets 3 are arranged in groups, each group of electrical connection sheets 3 includes two rows of electrical connection sheets 3 arranged opposite to each other, each row of electrical connection sheets 3 includes multiple electrical connection sheets 3, an arrangement direction of each row of electrical connection sheets 3 is configured to be the same as an arrangement direction A of the battery cells 5, the positive electrodes 51 and the negative electrodes 52 of the battery cells 5 are respectively connected to adjacent electrical connection sheets 3 in the two rows of electrical connection sheets 3 arranged opposite to each other, multiple welding holes 11 are formed, and each of the welding holes 11 is corresponding to one of the electrical connection sheets 3.

It is understandable that the number of groups of the electrical connection sheets 3 is the same as the number of rows of the battery cells. The positive electrodes 51 and the negative electrodes 52 of the battery cells 5 are connected to the adjacent electrical connection sheets 3 in the two rows of electrical connection sheets 3 arranged opposite to each other, that is, the positive electrode 51 of each of the battery cells 5 is connected to one electrical connection sheet 3, and the negative electrode 52 of each of the battery cells 5 is connected to another electrical connection sheet 3 opposite to the electrical connection sheet 3, so as to realize the series and parallel connection of the battery cells 5.

In one embodiment, the number of welding hole sealing covers 2 is twice the number of the groups of electrical connection sheets 3, and one row of welding holes 11 are sealed with each of the welding hole sealing covers 2.

It is understandable that each welding hole sealing cover 2 seals one row of welding holes 11, so as to reduce the number of welding hole sealing covers 2 and facilitate a mounting of the welding hole sealing covers 2 and the box cover body 1.

In an embodiment, the battery module box cover further includes a printed circuit board (PCB) 4, and the printed circuit board 4 and the electrical connection sheets 3 are arranged on the same side of the box cover body 1. The printed circuit board 4 is connected to the electrical connection sheets 3 through welding.

In one embodiment, the welding hole sealing covers 2 are connected to the box cover body 1 through welding.

In an embodiment, it is understandable that a welding of the printed circuit board 4 and the electrical connection sheets 3 is operated on a side of the box cover body where the printed circuit board and the electrical connection sheets are located. The printed circuit board 4 is arranged between two opposite rows of electrical connection sheets 3, so as to facilitate the welding of the printed circuit board 4 and the electrical connection sheets 3. The connection between the printed circuit board 4 and the electrical connection sheets 3, as well as the connection between the welding hole sealing covers 2 and the box cover body 1 are realized through welding, so as to achieve fixation without the use of screws, thereby reducing the number of parts and facilitating mounting.

In a second aspect, an embodiment of the present application provides a battery module, including:
the battery module box cover as described in any of the above embodiments; and
multiple battery cells 5, welded to the electrical connection sheets 3, where the positive electrodes 51 and the negative electrodes 52 of the battery cells 5 are arranged on the same side of the battery cells 5, and the positive electrodes 51 and the negative electrodes 52 of the battery cells 5 are welded to different electrical connection sheets 3.

It is understandable that a welding of the battery cells 5 and the electrical connection sheets 3 is performed when the battery cells 5 have been arranged in the box body 6, and the box cover body 1 has been fixedly connected to the box body 6.

In an embodiment, the battery module further includes a box body 6, the battery cells 5 are arranged in the box body 6, and the box body 6 is welded to the box cover body 1.

It is understandable that the connection between the box body 6 and the box cover body 1 is realized through welding, so as to achieve fixation without the use of screws, thereby reducing the number of parts and facilitating mounting.

In an embodiment, adhesive layers 7 are arranged between sides of the battery cells 5 away from the battery module box cover and the box body 6.

It is understandable that the adhesive layers 7 are coated on bottoms of the battery cells 5 or on an inner bottom of the box body 6. A thickness and a shape of the adhesive layers 7 are configured as needed. A fixed connection between the battery cells 5 and the box body 6 is achieved through the adhesive layers 7, so that parts, such as a traditional end plate and a side plate, are eliminated, thereby reducing the number of parts and facilitating mounting.

## Claims

1. A battery module box cover, comprising
a box cover body, welding holes being formed in the box cover body, and the welding holes penetrating through the box cover body;
electrical connection sheets fixed on a side of the box cover body, welding spots being arranged on the electrical connection sheets, and the welding spots being exposed through the welding holes; and
welding hole sealing covers fixed on another side of the box cover body and configured for sealing the welding holes.

2. The battery module box cover of claim 1, wherein the electrical connection sheets are fixed on the box cover body through injection molding, and the electrical connection sheets are clamped on the box cover body.

3. The battery module box cover of claim 1, wherein the electrical connection sheets comprise a positive electrode electrical connection sheet, a negative electrode electrical connection sheet, and series or parallel electrical connection sheets; the series or parallel electrical connection sheets are configured for connecting a plurality of battery cells in series or parallel to form a battery pack, the positive electrode electrical connection sheet is connected to positive electrodes of the battery pack, and the negative electrode electrical connection sheet is connected to negative electrodes of the battery pack; a plurality of welding holes and a plurality of series or parallel electrical connection sheets are arranged, each of the electrical connection sheets is corresponding to one of the welding holes; parts of the box cover body located between two adjacent welding holes are formed as partition portions; every two series or parallel electrical connection sheet are formed as one group, one group of series or parallel electrical connection sheets are arranged to be adjacent to each other and integrated with each other, and one group of series or parallel electrical connection sheets are clamped on the partition portion between the group of series or parallel electrical connection sheets.

4. The battery module box cover of claim 3, wherein fixing plates are arranged on a side of a circumference of welding holes corresponding to the positive electrode electrical connection sheet and the negative electrode electrical connection sheet; the fixing plates are integrally formed with the box cover body; the fixing plates, the positive electrode electrical connection sheet, and the negative electrode electrical connection sheet are arranged on a same side of the box cover body; and the positive electrode electrical connection sheet and the negative electrode electrical connection sheet are inserted into the fixing plates on a side of corresponding welding holes.

5. The battery module box cover of claim 1, wherein the electrical connection sheets are arranged in groups, each group of electrical connection sheets comprises two rows of electrical connection sheets arranged opposite to each other, each row of electrical connection sheets comprises a plurality of electrical connection sheets, an arrangement direction of each row of electrical connection sheets is configured to be same as an arrangement direction of the battery cells, the positive electrodes and the negative electrodes of the battery cells are connected to adjacent electrical connection sheets in the two rows of electrical connection sheets arranged opposite to each other, a plurality of welding holes are formed, and each of the welding holes is corresponding to one of the electrical connection sheets.

6. The battery module box cover of claim 5, wherein a number of welding hole sealing covers is twice a number of the groups of electrical connection sheets, and one row of welding holes are sealed with each of the welding hole sealing covers.

7. The battery module box cover of claim 1, wherein the battery module box cover further comprises a printed circuit board, the printed circuit board and the electrical connection sheets are arranged on a same side of the box cover body, and the printed circuit board is connected to the electrical connection sheets through welding; and/or
the welding hole sealing covers are connected to the box cover body through welding.

8. A battery module, comprising a battery module box cover, the battery module box cover comprising:
a box cover body, welding holes being formed in the box cover body, and the welding holes penetrating through the box cover body;
electrical connection sheets fixed on a side of the box cover body, welding spots being arranged on the electrical connection sheets, and the welding spots being exposed through the welding holes; and
welding hole sealing covers fixed on another side of the box cover body and configured for sealing the welding holes.

9. The battery module of claim 8, wherein the electrical connection sheets are fixed on the box cover body through injection molding, and the electrical connection sheets are clamped on the box cover body.

10. The battery module of claim 8, wherein the electrical connection sheets comprise a positive electrode electrical connection sheet, a negative electrode electrical connection sheet, and series or parallel electrical connection sheets; the series or parallel electrical connection sheets are configured for connecting a plurality of battery cells in series or parallel to form a battery pack, the positive electrode electrical connection sheet is connected to positive electrodes of the battery pack, and the negative electrode electrical connection sheet is connected to negative electrodes of the battery pack; a plurality of welding holes and a plurality of series or parallel electrical connection sheets are arranged, each of the electrical connection sheets is corresponding to one of the welding holes; parts of the box cover body located between two adjacent welding holes are formed as partition portions; every two series or parallel electrical connection sheet are formed as one group, one group of series or parallel electrical connection sheets are arranged to be adjacent to each other and integrated with each other, and one group of series or parallel electrical connection sheets are clamped on the partition portion between the group of series or parallel electrical connection sheets.

11. The battery module of claim 10, wherein fixing plates are arranged on a side of a circumference of welding holes corresponding to the positive electrode electrical connection sheet and the negative electrode electrical connection sheet; the fixing plates are integrally formed with the box cover body; the fixing plates, the positive electrode electrical connection sheet, and the negative electrode electrical connection sheet are arranged on a same side of the box cover body; and the positive electrode electrical connection sheet and the negative electrode electrical connection sheet are inserted into the fixing plates on a side of corresponding welding holes.

12. The battery module of claim 8, wherein the electrical connection sheets are arranged in groups, each group of electrical connection sheets comprises two rows of electrical connection sheets arranged opposite to each other, each row of electrical connection sheets comprises a plurality of electrical connection sheets, an arrangement direction of each row of electrical connection sheets is configured to be same as an arrangement direction of the battery cells, the positive electrodes and the negative electrodes of the battery cells are connected to adjacent electrical connection sheets in the two rows of electrical connection sheets arranged opposite to each other, a plurality of welding holes are formed, and each of the welding holes is corresponding to one of the electrical connection sheets.

13. The battery module of claim 12, wherein a number of welding hole sealing covers is twice a number of the groups of electrical connection sheets, and one row of welding holes are sealed with each of the welding hole sealing covers.

14. The battery module of claim 8, wherein the battery module box cover further comprises a printed circuit board, the printed circuit board and the electrical connection sheets are arranged on a same side of the box cover body, and the printed circuit board is connected to the electrical connection sheets through welding; and/or
the welding hole sealing covers are connected to the box cover body through welding.

15. The battery module box cover of claim 8, comprising: the battery module box cover of any of claims 1 to 7; and
a plurality of battery cells welded to the electrical connection sheets; wherein positive electrodes and negative electrodes of the battery cells are arranged on a same side of the battery cells, and the positive electrodes and the negative electrodes of the battery cells are welded to different electrical connection sheets.

16. The battery module of claim 8, wherein the battery module further comprises a box body, the battery cells are arranged in the box body, and the box body is welded to the box cover body.

17. The battery module of claim 16, wherein adhesive layers are arranged between a side of the battery cells away from the battery module box cover and the box body.
